# EUROPEAN PATENT SPECIFICATION

(11) **EP 1 185 437 B1**
(45) Date of publication and mention of the grant of the patent: **30.06.2004**
(21) Application number: 01917292.3
(22) Date of filing: 02.04.2001
(51) Int. Cl.: B60R 1/02

(54) **VEHICLE REAR VIEW MIRROR**
KRAFTFAHRZEUG- RÜCKBLICKSPIEGEL
RETROVISEUR POUR VEHICULE

(30) Priority: 14.04.2000 GB 0009333
(43) Date of publication of application: 13.03.2002
(73) Proprietor: Spafax International Limited, Basingstoke, Hampshire RG24 8UG (GB)
(72) Inventor: NORMAN, Timothy Hugh, St. Martin's, Isles of Scilly TR25 00L (GB)
(74) Representative: Bridge-Butler, Alan James
(86) International application number: PCT/GB2001/001503
(87) International publication number: WO 2001/079028

(56) References cited:
- EP-A- 0 047 808
- DE-A- 2 312 289
- DE-A- 2 732 489
- DE-A- 4 133 330
- DE-U- 7 404 579
- FR-A- 1 435 484
- FR-A- 1 502 291
- FR-A- 2 080 055
- GB-A- 1 095 331
- GB-A- 1 224 523
- GB-A- 1 572 746
- US-A- 3 171 886

## Description

This invention relates to a vehicle rear view mirror. In known types of rear view mirrors the mirror lens is usually carried directly on a housing which includes means to mount the mirror in position.

There are disadvantages with the constructions referred to above due to the ease with which the mirror can be broken if the mounting becomes distorted. It can also be difficult to locate the mirror in position without some form of bead or retaining element.

A vehicle rear view mirror according to the preamble of claim 1 is known from EP-A-0 047 808.

The present invention is intended to overcome the difficulties referred to above and to provide a construction which is easy to assemble and which can be easily dismantled to replace a mirror lens in the housing if required.

According to the present invention a vehicle rear view mirror comprises a housing, and a mirror lens carried by a location frame, said frame and/or housing being made from a resilient material and the frame being a resilient snap-fit within the housing characterised in that the frame is located within the rim of the housing without extending laterally over the outer edges thereof.

Thus, due to the mirror lens being carried in the frame, it is easier to fit into the housing and the possibilities of damage to the mirror lens during fitting is reduced.

Preferably the frame is located within a rim of the housing and the frame can be a resilient snap fit.

In a preferred construction the frame is provided with engagement means to resiliently engage retaining means on the housing.

Thus, the engagement means may comprise one or more abutments adapted to locate behind one or more co-operating catches which provide said retaining means on the housing.

Preferably the abutments and/or the catches are resilient.

The mirror lens can be a resilient snap fit in the frame and the frame can be provided with one or more inner abutments adapted to retain the mirror lens in place.

The frame and/or housing can be made from any convenient material, for example metal or a synthetic plastics material.

Preferably the housing is provided by a casing which covers the rear face of the mirror lens and which is provided with means to receive a mounting.

The mirror lens can be any convenient shape, for example concave, convex or flat and is conveniently of the polycarbonate unbreakable type or glass.

The invention can be performed in various ways but one embodiment will now be described by way of example and with reference to the accompanying drawings in which :
Figure 1 is a plan view from above of the vehicle rear view mirror according to the invention;
Figure 2 is a cross-sectional side elevation of the mirror shown in Figure 1 but with the mirror lens removed for clarity;

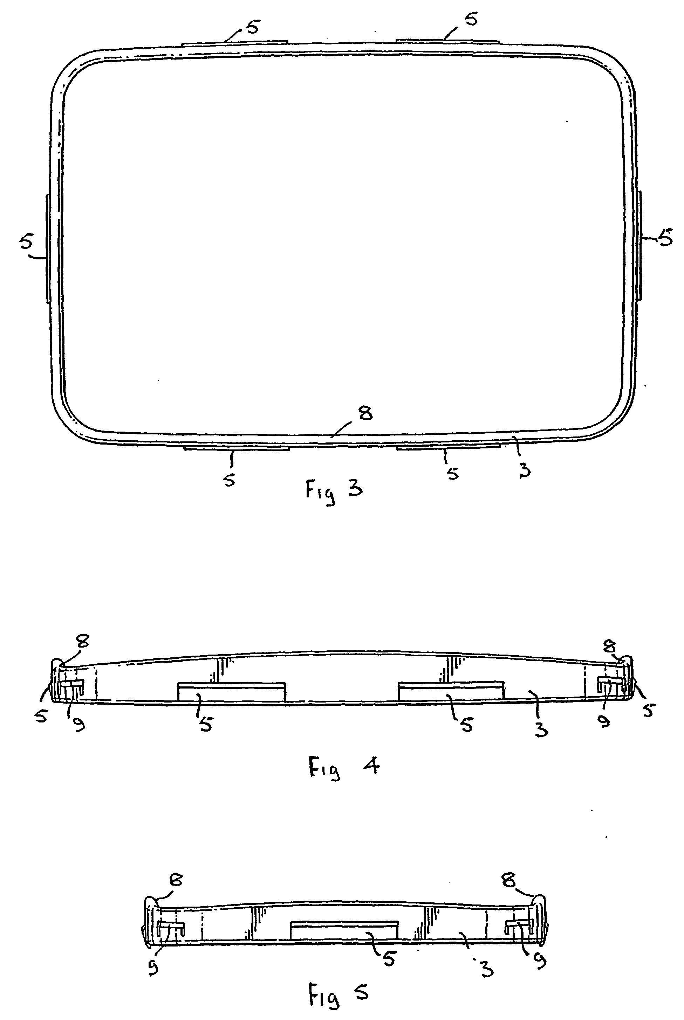

Figure 3 is a plan view from above of the mirror frame employed in the construction;
Figure 4 is a side elevation of the mirror frame shown in Figure 3;
Figure 5 is an end elevation of the mirror frame shown in Figures 3 and 4;
Figure 6 is a plan view from below of the mirror frame shown in Figure 3;
Figure 7 is a cross-sectional side elevation of the mirror frame on the line A-A of Figure 6; and,
Figure 8 is a cross-sectional end elevation on the line B-B of Figure 6.

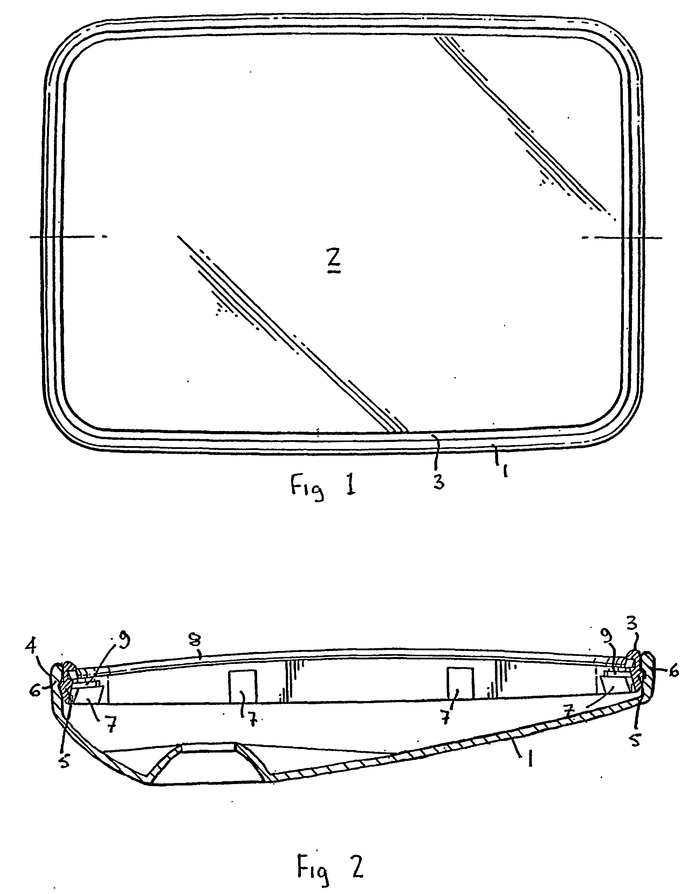

As shown in the drawings a vehicle rear view mirror according to the present invention comprises a housing in the form of a casing 1 and mirror lens 2, which is only shown in Figure 1, and a frame 3 which is adapted to carry the mirror lens 2 and locate it within the casing 1.

The casing has a rim portion 4 within which the frame 3 is located and the frame is a resilient snap fit in the casing 1.

The frame 3 is provided with engagement means to resiliently engage retaining means in the casing 1, these engagement means comprising one or more abutments 5 which are adapted to locate behind one or more co-operating catches 6 which provide the retaining means on the casing 1.

If desired the abutments and catches could be provided as continuous ridges on the frame and casing but, as shown in the drawings, a series of abutments and catches can be provided. In the construction shown a single abutment and catch are provided at transverse ends of the frame and casing and two abutments and catches are provided on each of the sides.

The frame 3 and/or casing 1 can be made from any convenient resilient material, for example metal, but in the construction being described they are formed from a suitable synthetic plastics material which has inherent resilience.

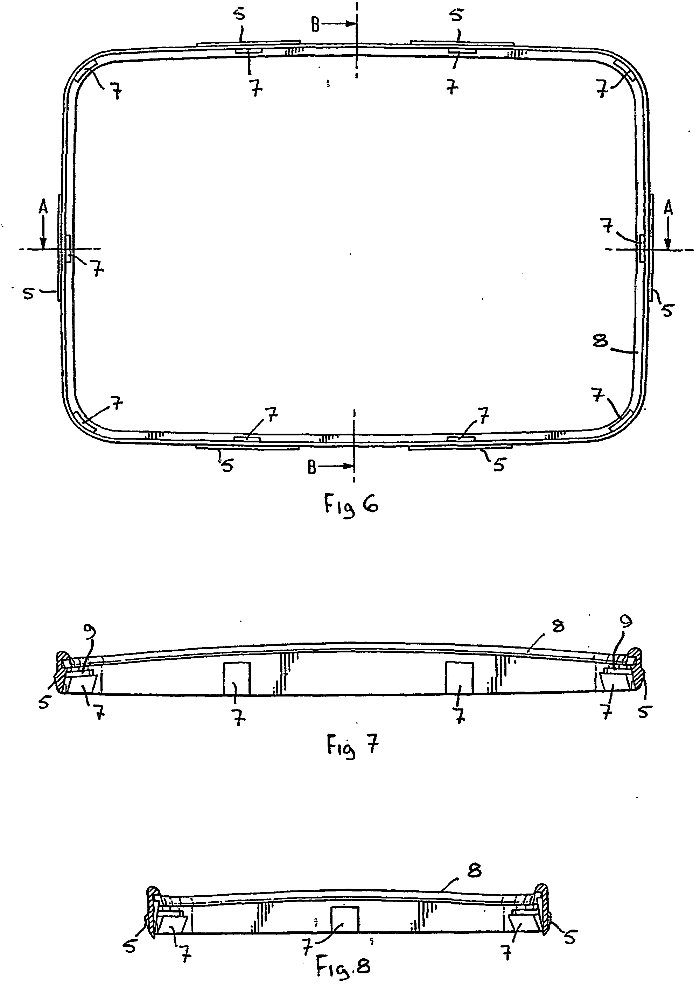

The mirror lens 2 is a resilient snap fit in the frame 3, the frame 3 being provided with one or more inner abutments 7 which are adapted to retain the mirror lens 2 in place. The upper rim 8 of the frame 3 projects inwardly so that when the mirror lens 2 is snapped into place it is retained between the inwardly projecting rim 8 and the inner abutments 7. The inner projecting face of the rim 8 can be seen most clearly in Figure 6.

In the construction being described small slots 9 are provided at each corner of the frame which supply further resilience to the corners to assist assembly.

The casing is provided with a reinforced indented boss which is suitable adapted to receive a mounting (not shown). The mounting can be of any convenient type suitable to allow adjustment of the mirror when in place.

In the construction described above the mirror lens is convex but it could be concave, flat or any other convenient shape. The present construction is particularly suitable for use with mirror lens of the polycarbonate unbreakable type.

In order to assemble the construction it is merely necessary to press the mirror lens into place in the frame where it is retained by the abutments 7 and then press the frame into the housing or casing 1. The rear face of the mirror lens is protected and the frame can be removed from the casing by prising it out with a suitable instrument.

The present construction is light, easy to assemble and provides a rigid mounting for the mirror lens in the housing or casing 1.

## Claims

1. A vehicle rear view mirror comprising a housing (1), and a mirror lens (2) carried by a location frame (3), said frame (3) and/or housing (1) being made from a resilient material and the frame (3) being a resilient snap-fit within the housing (1)**characterised in that** the frame (3) is located within the rim (4) of the housing (1) without extending laterally over the outer edges thereof.

2. A mirror as claimed in claim 1 **characterised in that** said housing (1) and said frame (3) are releasably detachable.

3. A mirror as claimed in claim 1 or claim 2 **characterised in that** said housing (1) is provided with frame retainment means (6) and said frame is provided with housing engagement means (5).

4. A mirror as claimed in claim 3 **characterised in that** said frame retainment means (6) comprises one or more catches (6) and said housing engagement means comprises one or more abutments (5) which co-operate with said catches (6).

5. A mirror as claimed in claims 1 to 4 **characterised in that** said frame (3) is provided with lens engagement means (7).

6. A mirror as claimed in claim 5 **characterised in that** said lens engagement means (7) comprises one or more abutments (7) adapted to engage said lens (2).

7. A mirror as claimed in claim 5 or claim 6 **characterised in that** said lens (2) is a resilient snap fit in said frame (3).

8. A mirror as claimed in any of claims 1 to 7 **characterised in that** said frame (3) and/or said housing (1) are made from a resilient synthetic plastics material.

9. A mirror as claimed in any of claims 1 to 8 **characterised in that** said housing (1) comprises a casing adapted to cover the rear face of said lens (2).

10. A mirror as claimed in claim 9 **characterised in that** said housing (1) is provided with means to receive a mounting attached to said vehicle.

11. A mirror as claimed in any one of the preceding claims **characterised in that** said lens (2) is concave or convex or flat.

12. A mirror as claimed in claim 11 **characterised in that** said lens (2) is of the polycarbonate unbreakable type, or any other substrate on which a reflective surface may be deposited.

13. A mirror as claimed in claim 11 **characterised in that** said lens (2) is glass.

14. A mirror as claimed in any of claims 1 to 13 **characterised in that** said frame (3) is provided with slots (9) at each corner to provide further resilience to said frame.

## Patentansprüche

1. Kraftfahrzeug-Rückblickspiegel umfassend ein Gehäuse (1), und eine durch einen Lokalisierungsrahmen (3) getragene Spiegellinse (2), der Rahmen (3) und/oder das Gehäuse (1) sind aus einem elastischen Material gemacht und der Rahmen (3) ist ein elastischer Schnappeinsatz in das Gehäuse (1), **dadurch gekennzeichnet, dass** der Rahmen (3) innerhalb der Einfassung (4) des Gehäuses (1) angeordnet ist, ohne sich lateral über die äußeren Kanten hiervon zu erstrecken.

2. Spiegel nach Anspruch 1, **dadurch gekennzeichnet, dass** das Gehäuse (1) und der Rahmen (3) lösbar abnehmbar sind.

3. Spiegel nach Anspruch 1 oder 2, **dadurch gekennzeichnet, dass** das Gehäuse (1) mit Rahmenhalterungsmitteln (6) versehen ist und der Rahmen mit Gehäuseeingriffsmitteln (5) versehen ist.

4. Spiegel nach Anspruch 1, **dadurch gekennzeichnet, dass** die Rahmenhalterungsmittel (6) eine oder mehrere Rasten (6) umfassen und die Gehäuseeingriffsmittel einen oder mehrere Anschläge (5) umfassen, welche mit den Rasten (6) kooperieren.

5. Spiegel nach einem der Ansprüche 1 bis 4, **dadurch gekennzeichnet, dass** der Rahmen mit Linseneingriffsmitteln (7) versehen ist.

6. Spiegel nach Anspruch 5, **dadurch gekennzeichnet, dass** die Linseneingriffsmittel (7) eine oder mehrere zur Aufnahme der Linse (2) angepasste Anschläge (7) umfassen.

7. Spiegel nach Anspruch 5 oder 6, **dadurch gekennzeichnet, dass** die Linse (2) ein elastischer Schnappeinsatz in den Rahmen (3) ist.

8. Spiegel nach einem der Ansprüche 1 bis 7, **dadurch gekennzeichnet, dass** der Rahmen (3) und/oder das Gehäuse (1) aus einem elastischen synthetischen Kunststoffinaterial gemacht sind.

9. Spiegel nach einem der Ansprüche 1 bis 8, **dadurch gekennzeichnet, dass** das Gehäuse (1) eine zum Abdecken der Rückseite der Linse (2) angepasste Verkleidung umfasst.

10. Spiegel nach Anspruch 9, **dadurch gekennzeichnet, dass** das Gehäuse (1) mit Mitteln zum Aufnehmen einer an dem Fahrzeug angebrachten Befestigung versehen ist.

11. Spiegel nach einem der vorangegangenen Ansprüche, **dadurch gekennzeichnet, dass** die Linse (2) konkav oder konvex oder flach ist.

12. Spiegel nach Anspruch 11, **dadurch gekennzeichnet, dass** die Linse (2) von unbrechbarem Polycarbonattyp ist, oder aus jedem anderen Substrat, auf dem eine reflektierende Oberfläche aufgebracht werden kann.

13. Spiegel nach Anspruch 11, **dadurch gekennzeichnet, dass** die Linse (2) aus Glas ist.

14. Spiegel nach einem der Ansprüche 1 bis 13, **dadurch gekennzeichnet, dass** der Rahmen (3) mit Schlitzen (9) an jeder Ecke versehen ist, um zusätzliche Elastizität des Rahmens bereitzustellen.

## Revendications

1. Rétroviseur pour véhicule comprenant un logement (1), et une lentille miroir (2) portée par un châssis de montage (3), lesdits châssis (3) et/ou logement (1) étant composés d'un matériau élastique et le châssis (3) étant encliqueté élastiquement dans le logement (1) **caractérisé en ce que** le châssis (3) est placé à l'intérieur de la bordure (4) du logement (1) sans s'étendre latéralement au-delà des bords extérieurs de celle-ci.

2. Rétroviseur selon la revendication 1, **caractérisé en ce que** ledit logement (1) et ledit châssis (3) sont détachables de manière séparable.

3. Rétroviseur selon la revendication 1 ou la revendication 2, **caractérisé en ce que** ledit logement (1) est pourvu de moyens de retenue de châssis (6) et ledit châssis est pourvu de moyens d'engagement de logement (5).

4. Rétroviseur selon la revendication 3, **caractérisé en ce que** lesdits moyens de retenue de châssis (6) comprennent un ou plusieurs cliquets (6) et lesdits moyens d'engagement de logement comprennent une ou plusieurs butées (5) qui coopèrent avec lesdits cliquets (6).

5. Rétroviseur selon les revendications 1 à 4, **caractérisé en ce que** ledit châssis (3) est pourvu de moyens d'engagement de lentille (7).

6. Rétroviseur selon la revendication 5, **caractérisé en ce que** lesdits moyens d'engagement de lentille (7) comprennent une ou plusieurs butées (7) adaptées pour venir en engagement avec ladite lentille (2).

7. Rétroviseur selon la revendication 5 ou la revendication 6, **caractérisé en ce que** ladite lentille (2) est encliquetée élastiquement dans ledit châssis (3).

8. Rétroviseur selon l'une quelconque des revendications 1 à 7, **caractérisé en ce que** ledit châssis (3) et/ou ledit logement (1) sont faits à partir d'un matériau plastique synthétique élastique.

9. Rétroviseur selon l'une quelconque des revendications 1 à 8, **caractérisé en ce que** ledit logement (1) comprend un boîtier adapté pour recouvrir la face arrière de ladite lentille (2).

10. Rétroviseur selon la revendication 9, **caractérisé en ce que** ledit logement (1) est pourvu de moyens pour recevoir une fixation fixée audit véhicule.

11. Rétroviseur selon l'une quelconque des revendications précédentes, **caractérisé en ce que** ladite lentille (2) est concave ou convexe ou plate.

12. Rétroviseur selon la revendication 11 **caractérisé en ce que** ladite lentille (2) est du type incassable en polycarbonate ou un quelconque autre substrat sur lequel une surface réfléchissante peut être déposée.

13. Rétroviseur selon la revendication 11, **caractérisé en ce que** ladite lentille (2) est en verre.

14. Rétroviseur selon l'une quelconque des revendications 1 à 13, **caractérisé en ce que** ledit châssis (3) est pourvu de fentes (9) à chaque coin pour conférer une élasticité supplémentaire audit châssis.
